# EUROPEAN PATENT SPECIFICATION

(11) **EP 1 076 851 B1**
(45) Date of publication and mention of the grant of the patent: **28.05.2003**
(21) Application number: 99919387.3
(22) Date of filing: 27.04.1999
(51) Int. Cl.: G06F 9/46

(54) **DISTRIBUTED DATA PROCESSING USING CLIENT AND SERVER OBJECTS**
VERTEILTE DATENVERARBEITUNG MIT KLIENT- UND SERVEROBJEKTEN
TRAITEMENT REPARTI DES DONNEES UTILISANT DES OBJECTS CLIENT ET SERVEUR

(30) Priority: 01.05.1998 GB 9809512
(43) Date of publication of application: 21.02.2001
(73) Proprietor: BRITISH TELECOMMUNICATIONS public limited company, London EC1A 7AJ (GB)
(72) Inventor: LEBRE, Caroline, Anne, Michele, Ipswich, Suffolk IP1 3NB (GB); TITMUS, Richard, John, Ipswich, Suffolk IP4 3AN (GB)
(74) Representative: Roberts, Simon Christopher
(86) International application number: GB9901302
(87) International publication number: WO99057637

(56) References cited:
- WO-A-97/47091
- BERGHOFF J ET AL: "Agent-based configuration management of distributed applications" PROCEEDINGS. THIRD INTERNATIONAL CONFERENCE ON CONFIGURABLE DISTRIBUTED SYSTEMS (CAT. NO.96TB100046), PROCEEDINGS OF INTERNATIONAL CONFERENCE ON CONFIGURABLE DISTRIBUTED SYSTEMS, ANNAPOLIS, MD, USA, 6-8 MAY 1996, pages 52-59, XP002086942 ISBN 0-8186-7395-8, 1996, Los Alamitos, CA, USA, IEEE Comput. Soc. Press, USA
- RAVI T M ET AL: "A basic protocol for routing messages to migrating processes" PROCEEDINGS OF THE 1988 INTERNATIONAL CONFERENCE ON PARALLEL PROCESSING, UNIVERSITY PARK, PA, USA, 15-19 AUG. 1988, pages 188-197 vol.2, XP002090982 ISBN 0-271-00654-4, 1988, University Park, PA, USA, Pennsylvania State Univ, USA

## Description

### Field of the invention

This invention relates to a processing data in a distributed computing environment.

### Background

Data processing may be carried out in a distributed computing environment in which client software interacts with server software, connected in a network. A server can be considered to have a resource which is to be shared with a number of clients which have an interest in it. The server waits for client initiated requests and replies to them individually with information derived from the resource requested by the client.

Conventionally, the client software is located at fixed workstations connected in the network, which interacts with servers at fixed locations. More recently, mobile agent software has been developed which allows the client software to move to a location close to a server in order to make better use of the facilities of the server. For example, if a manufacturing company has factories at two different locations, with their own local computer networks, an operator at the first location may wish to interrogate databases of servers at both locations to determine e.g. the availability of certain stock items which may be held in warehouses at the two locations. In this situation, it is convenient for the client data interrogation software to migrate from the first location to the second location in order to be close to the server at the second location, to enable the associated databases to be interrogated efficiently. The mobile client software is known as a mobile agent.

A number of different systems which provide mobile agents have been developed: MuBot by Crystaliz, Inc., Agent Tcl by Dartmouth College, Aglets by IBM, MOA by the Open Group Inc, GMAF/Magna by GMD Fokus and Odyssey by General Magic Inc.

In "Agent-Based Configuration Management of Distributed Applications", Berghoff et al, Proceedings of the third international conference on Configurable Distributed Systems (Annapolis USA, 6-8 May 1996), pages 52-59, configuration management of distributed applications is discussed. In particular, the suitability of mobile agents in such configuration management is described and discussed. An example of configuration management which does not use mobile agents is provided as background. In that example it is assumed that a functional unit M has to be replaced in each of a set of replicated server components. To achieve this with minimal disturbance of the running application, the replicated server components are operated on in sequence. The following steps are taken to replace the unit M in the first of the replicated server components A.
- Advise the broker (which distributes incoming requests between servers to achieve a load balancing) not to despatch any further requests to server component A.
- Advise server component A to reject incoming requests.
- Monitor current traffic on server component A.
- Decide at which point in time the server component is replaced, depending upon the current traffic.
- When the time had come, suspend all current bindings to server component A by passivating the corresponding interfaces on the client side.
- After the activities of server component A have stopped (due to the passivation of the client interfaces), the unit M is replaced.
- Resume bindings to server component A by activating the corresponding client interfaces.
- Advise server component A to accept incoming requests.
- Advise broker that future requests can be despatched to server component A.

The paper describes a management architecture which is based on a global management component (GMC) which interacts with the application components to perform management operations. This centralised architecture is said to exhibit disadvantages when applied to large and complex distributed applications. All messages concerning management interactions have to be handled by a GMC. The resulting traffic tends to overload the management components and leads to poor response times. If the application is distributed over a wide area, the communication expense may grow dramatically. To overcome these limitations, Berghoff et al investigated a decentralised management system using replicated global management components. However, it turned out that this system still suffered from low scalability, due to synchronisation overhead between the decentralised management components.

As an alternative Berghoff et al propose an infrastructure for mobile agents. Berghoff et al explain that the advantage of mobile agents in comparison to traditional approaches to distributed computation is mostly one of efficiency. Many operations require protracted dialogue or the shuffling around of considerable amounts of data. If these are carried out across a network using conventional means, they can lead to increased network load and loss of performance due to latency and lack of bandwidth. Mobile agents helped reduce the need for network communication by moving the code that handles the interaction closer to the source of the data. Berghoff et al stress that in an environment supporting mobile agents, not every agent is required to be mobile - in fact, stationary agents play an important part by acting as intermediaries or proxies between the "agent world" and the normal operating environment on a host.

They implemented a prototype agent infrastructure to support experiments in the area of mobile agents. This forms the basis of an execution environment for mobile and stationary agents. The agent infrastructure consists of an agent server which deals with the details of accepting agents to be run, constructing an appropriate run time environment, launching and removing the agent in turn. Agents also need to communication with each other and with other programs. The prototype agent infrastructure supported this through the notion of an information space that agents could use for sharing data and initiating and answering requests. This was a low-level facility which was general enough to allow for a variety of interaction styles, both declarative and RPC-like. They then designed an extension to the existing centralised management system, with the main requirements being as follows. Application components should not have to be modified in order to be manageable by agents. Existing management application components should be reusable. It should be possible to progress incrementally from a purely centralised to an agent-based management system. In order to facilitate the transition and take into account resource limitations of hosts' networks, the agent infrastructure should not have to be present on every host on which the distributed application runs. The existing management architecture was integrated on a host with mobile agents by introducing specialised agents that acted as mediators between mobile agents and the management system. These agents were stationary, ie they were assigned to certain hosts from which they did not move. They communicated with mobile agents through the information space and performed management requests on application components. Berghoff et al conclude their paper by identifying the main advantages of their approach to agent -based configuration management:
Increased flexibility as mobile agents can carry code to extend or replace the functionality of stationary agents, application and management components. New management functionality or protocols are introduced in a straight forward manner.
Increased reliability, as mobile agents can act autonomously in a temporarily disconnected part of the network.
Increased performance and reduced network traffic in large scale applications, as the agent moves to the area where the management operations have to be carried out.
During processing of its management task the latency of the management calls (which are short distance calls now) is decreased, and the total latency will decrease as wet The intermediate information required to fulfil the management task is processed locally and does not need to travel far to a GMC. Thus the total load of the GMC is decreased substantially.
Berghoff et al nowhere propose that the mobile agents should have server functionality, nor that this is possible or would in any way be desirable. There is no teaching to have mobile servers.

### Summary of the invention

In accordance with the invention, it has been appreciated that there are situations in which it would be advantageous to make the server mobile within a distributed computing environment.

In accordance with the invention there is provided a method of processing data in a distributed computing environment wherein a client and a server process data, the method comprising sending the server from a first place where it communicates with the client, through the distributed computing environment towards a second different place to perform data processing therefrom.

The method may include freezing incoming calls for data processing to the server at the first place whilst the server is being sent from the first place to the second place, and thereafter directing the frozen calls towards the second place to be processed by the server when it has become functional at the second place. This has the advantage of ensuring that connections are not lost to the server whilst it moves from the first place to the second place.

In another aspect, the invention includes, at the second place, receiving the server sent from the first place in order to perform data processing at the second place.

In order to transmit the server from the first place to the second place, it may be converted from an operational configuration at the first place into a configuration suitable for transmission through the distributed environment to the second place. The conversion may comprise serialisation of the server.

The invention also includes a software entity operable to provide a server for a client in a distributed computing environment characterised in that the software entity is selectively re-locatable to different places through the environment.

In another aspect, the invention includes a signal for transmission in a distributed computing environment wherein a client and a server process data, the signal comprising the server serialised for transmission between a first place where it communicates with the client, through the distributed computing environment and a second different place to perform data processing.

The transmission of the server from the first place towards the second place may be controlled by a proxy and more particularly, the invention includes a proxy for use in a distributed computing environment wherein a client and a server process data, the proxy being operable to send the server from a first place where it communicates with the client, through the distributed computing environment towards a second different place to perform data processing.

### Brief description of the drawings

In order the invention may be more fully understood, an embodiment thereof will now be described way of example with reference to the accompanying drawings, in which:
Figure 1 is a schematic block diagram of a distributed computing environment which uses mobile software agents;
Figure 2 is a more detailed diagram of one of the hosts shown in Figure 1;
Figure 3 illustrates schematically the moving of a mobile server from a first place to a second place in accordance with the invention; and
Figure 4 is a schematic timing diagram of signal communication between the first place and the second place in respect of the movement of the server.

### Detailed description

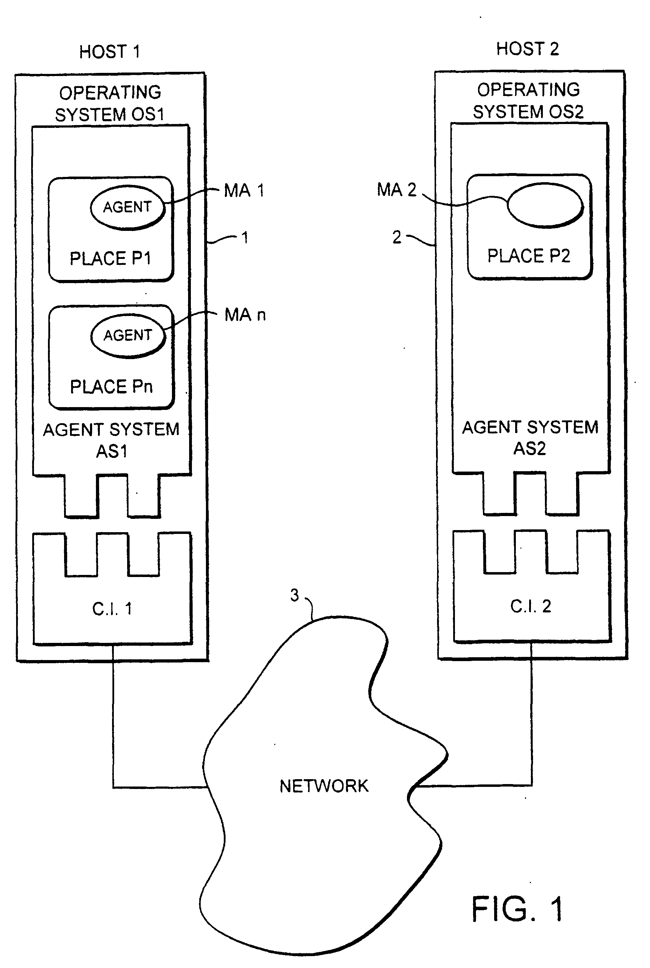

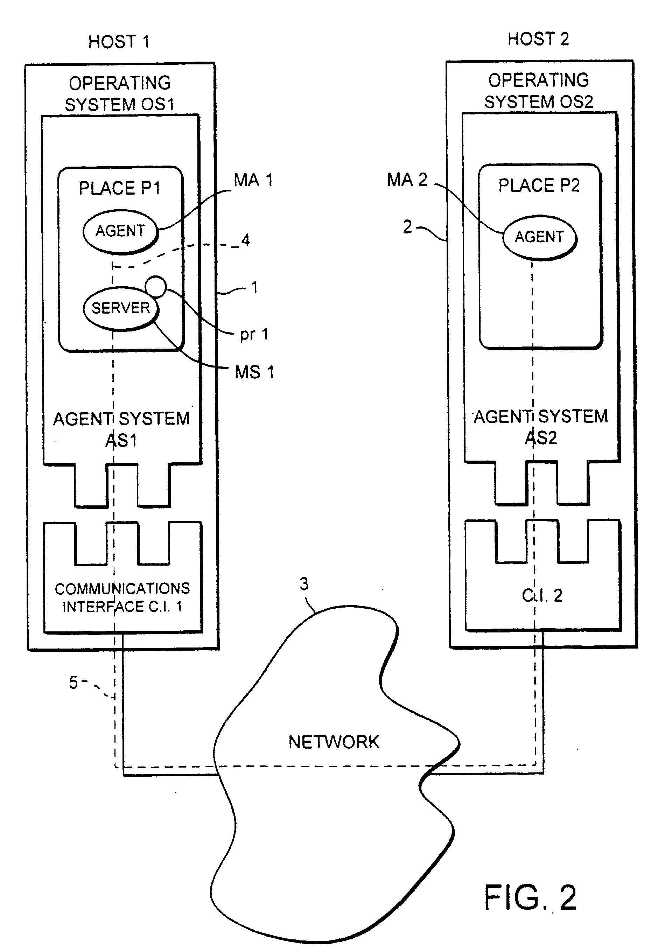

In the following description, the terminology adopted by the Object Management Group (OMG) for mobile agents has been adopted by way of convenient explanation. The OMG has defined a common standard for interoperability of objects between different systems under a common object management architecture that provides an object request broker known commercially as CORBA which provides an infrastructure allowing objects to converse independently of the specific platforms and techniques used to implement the objects. In order to deal with interoperability of mobile agents, the OMG has produced a document "Mobile Agent Facility Specification" 1st September 1997, OMG TC Document orbos/97-09-20, available from the Object Management Group, 492 Old Connecticut Path, Framingham, MA 01707, USA.. The full specification is also available to the public from the OMG's website (whose URL is *wwwomg.org).* This will now be explained with reference to Figures 1 and 2.

For mobile software agents, which are clients, the world is made up of regions which include places between which the mobile agent can move. Referring to Figure 1, first and second host computing systems 1,2 are interconnected by a network 3. The first and second host systems can be of any suitable form e.g. local area networks, individual computers and the like, which each operate with their own operating system *OS1*, *OS2.* In a conventional manner, the individual hosts 1, 2, may include one or more computers or processors, each of which include a processor, volatile working memory and non-volatile data storage. Each host is provided with a communications interface *CI1, CI2* to allow communication between them via the network 3. The network 3 can be of any suitable form, for example a wide area network, a local area network, intranet or Internet.

Considering the host 1, its operating system *OS1* provides an environment in which software can operate. The client software is configured as mobile software agent *MA 1.* Similarly, the host 2 has an operating system *OS2* and a mobile agent *MA2.* A further mobile agent *MAn* is shown in host 1. Each mobile agent *MA* is operative at a place *P*. Thus, considering the host 1, mobile agent *MA1* is operative at place *P1* and mobile agent *MAn* is operative at place *Pn*. Mobile agent *MA2* is at place *P2* in host 2. The mobile agents can move from place to place. It will be understood that in host 1, the places *P* may be individual computers connected in a network that comprises host 1 or any other suitable hardware configuration, which will not be described further herein. The same is true for host 2. The OMG mobile agent specification is designed to provide interoperability between different operating systems in order to allow transport of mobile client agents from one host to another. It is assumed in the configuration of Figure 1 that different operating systems *OS1, OS2* are in use although this is not an essential feature of the invention. It will be appreciated that the OMG specification makes use of CORBA to allow interoperability between different hardware and software configurations. The agents operating within the operating system *OS1* define an agent system *AS1* in host 1. A similar agent system *AS2* operates in host 2 shown in Figure 1.

The software process is arranged in a client-server configuration as will now be explained with reference to Figure 2. Conveniently, but not necessarily, the software may be object oriented such that the mobile client agents and the servers can each be considered as objects. As shown in Figure 2, server software *MS 1* is shown at place *P1* which can service calls from the mobile clients described with reference to Figure 1. For example, the mobile agent *MA1* is a client at place *P1* and can make data calls on the server *MS 1* over path 4 to perform data processing. The client and server do not however need to be located at the same place *P*. Thus, in the example of Figure 2, the server *MS1* can service data calls from mobile client agent *MA 2* at place *P*2 over communication path 5. It will be understood that there may be more than one server *MS* in the distributed computing environment.

In accordance with the invention, the server *MS 1* is mobile within the distributed computing environment. In order to manage the mobility of the mobile server *MS 1* , it is given a software proxy *pr 1* which,is different in each place *P*. The proxy *pr 1* is advertised to CORBA with the mobile server interface, instead of the mobile server itself. All processing calls for the server go to the proxy first and are then redirected by it to the server. Therefore, the proxy *pr 1* knows at all times how many clients are connected to the server *MS 1* and how many calls are in progress.

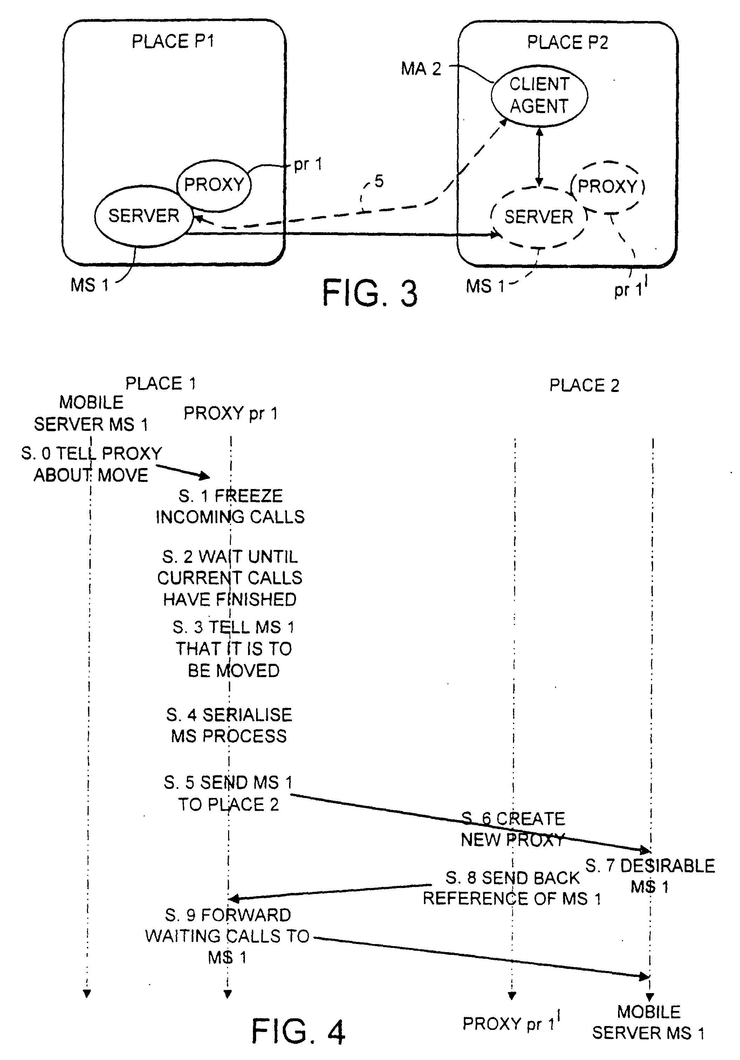

Referring to Figure 3, there are situations where it would be convenient to move the server agent *MS1* from place *P1* to place *P2* via the communication interface *CI1*, network 3 and interface *CI2.* For example, the server *MS 1* could then function with enhanced operability with client *MA 2* residing in the agent system *AS2* in host 2. The transfer of the server *MS 1* from place *P1* to place *P2* will now be described in detail with reference to Figure 4.

Initially, when the mobile server *MS 1* decides or is told to move from place *P1,* at step S.0, it tells its proxy *pr1* the place to which it is to be moved. In this case, the mobile server *MS1* is to be moved to place *P2.* Alternatively, the proxy *pr1* may be told by some external third party to move the mobile server. The moving process then starts.

At step S.1, the proxy *pr1* freezes all incoming calls for data processing to the mobile server *MS 1.*

At step S.2, the proxy *pr1* waits until all current data processing handled by mobile server *MS 1* has finished.

Then, at step S.3, the proxy *pr1* tells mobile server *MS 1* that it is about to be moved and that it must perform any task needed to be completed before leaving place *P1.*

Then, at step S.4, the proxy causes the mobile server *MS 1* to be serialised, namely to convert it from its operational state into a condition suitable for transmission through the network 3 (Figure 1).

Then, at step S.5, the serialised mobile server is sent to the place *P2* of host 2 via communications interface CI1, network 3 and communications interface CI2.

At step S.6, a new proxy *pr1'* is produced in place *P2* for the mobile server *MS1* when located in place *P2*.

At step S.7, the mobile server *MS1* is de-serialised at place *P2* and thereby recreated in an operational condition.

At step S.8, the newly created proxy *pr1'* sends back locational reference data for mobile server *MS1,* so as to indicate to the proxy *pr1,* the new CORBA reference of mobile server *MS1.*

Then, at step S.9, the calls frozen at step S.1 are forwarded to the mobile server *MS1* through the network 3, by proxy *pr1,* from place *P1* to place *P2.*

The procedure described with reference to Figure 4 has the advantage that communication with the mobile server *MS 1* is not lost during the transfer process. The steps ensure that any data processing carried out at place *P1* is completed before the transfer occurs and, whilst the transfer is taking place, incoming calls are frozen and then transferred to the new place.

Clients can find the moved mobile server *MS 1* by making an appropriate request, as for any other CORBA object, and will receive the reference of its proxy. The proxy that is advertised for the mobile agent can either be the first one *pr1*, in which case calls will be directed from *pr1* to *pr1*', or *pr1'* itself.

At the completion of the moving process for the mobile server, the proxy *pr 1* is no longer needed and is cancelled.

It will be understood that client agents such as agent *MA2* shown at place *P1* in Figure 3 can be mobile in a conventional manner, in accordance with the OMG specification for mobile agents. Thus, client agent *MA2* can be moved in a conventional manner by serialising the agent, transmitting it through the network 3 to a different place and de-serialising the agent at the new place. Thus, it is possible according to the invention to move an entire client - server combination from one place to another or to different places.

It will be understood that the mobile server MS1 when at a particular place, will reside in the working memory of a particular computer within the host, and may if required be stored in the non-volatile memory of the computer associated with the place *P*, to provide a record thereof if the network or a part thereof is shut down. The mobile server may also be provided on a storage medium such as an optical or magnetic disc, so that it can be loaded into a computer at a particular place *P*, and then commence its mobile activities in the network.

Whilst the previously described clients and servers may conveniently be configured as software objects in an object oriented environment, this is not essential and they can be configured as batches of conventional code. Also, whilst the invention has been described in relation to CORBA object management architecture, other management architectures could be used such as OLE by Microsoft, suitably configured to handle mobile objects

Movement of the server in accordance with the invention renders the computing process much more flexible. For example in an Internet application, if a large number of clients in the United Kingdom are calling a server which is located at a place in the USA, a large number of transatlantic calls would need to be set up, leading to inefficiencies. In accordance with the invention, the server object can migrate from a place in the USA to a place in the United Kingdom, speeding up execution of the individual client/server processes.

## Claims

1. A method of processing data in a distributed computing environment wherein a client (MA 1) and a server (MS 1) process data, **characterised in that** the method comprises sending the server (MS 1) from a first place (P1) where it communicates with the client (MA1), through the distributed computing environment towards a second different place (P2) to perform data processing therefrom.

2. A method according to claim 1 including freezing incoming calls for data processing to the server (MS 1) at the first place (P1) whilst it is being sent from the first place (P1) to the second place (P2), and thereafter directing the frozen calls towards the second place (P2) to be processed by the server (MS1) when it has become functional at the second place (P2).

3. A method according to claim 2 including waiting for the server (MS1) to complete its current processing tasks before sending it to the second place (P2).

4. A method according to any preceding claim including converting the server (MS1) from an operational configuration at the first place (P1) into a configuration suitable for transmission through the distributed environment to the second place (P2).

5. A method according to claim 4 wherein the conversion comprises serialisation of the server (MS1).

6. A method according to any preceding claim including creating a proxy (pr 1) for the server (MS1) at the first place (P1), which controls the sending of the server (MS 1) towards the second place (P2).

7. A method according to any preceding claim including sending the client (MA 1) towards a different place in the distributed computing environment.

8. A method of processing data in a distributed computing environment wherein a client (MA 1) and a server (MS 1) process data, **characterised in that** the method comprises receiving the server (MS 1) sent from a first place (P1) where it communicated with the client (MA 1), through the distributed computing environment, at a second different place (P2), to perform data processing at the second place (P2).

9. A method according to claim 8 wherein the server (MS 1) is received at the second place (P2) in a form suitable for transmission through the distributed environment, and including converting the received server (MS 1) at the second place (P2) into a form suitable for processing data at the second place (P2).

10. A method according to claim 9 wherein the converting includes deserialising the server (MS 1).

11. A method according to claim 8,9 or 10 including producing a proxy (pr 1')for the received server (MS 1), at the second place (P2).

12. A method according to anyone of claims 8 to 11 including receiving at the second place (P2), data processing calls for the server (MS 1) directed thereto from the first place (P 1) after the server (MS 1) has become operational at the second place (P2).

13. A software entity operable to provide a server (MS 1) for a client (MA 1) in a distributed computing environment **characterised in that** the software entity is selectively re-locatable to different places through the environment.

14. An entity according to claim 13, operable to function as the server (MS 1) at a first place (P 1) in the environment and then to re-locate and function as the server (MS 1) at a second place (P 2) in the environment.

15. An entity according to claim 13 or 14, operable such that data calls thereto from a client (MA 1) are frozen during the re-location.

16. An entity according to any one of claims 13 to 15 operable to provide a proxy (pr 1) functional to send the server (MS 1) through the environment to achieve the re-location.

17. An entity according to claim 16 wherein the proxy (pr 1) is functional to wait for the server (MS 1) to complete its current processing tasks before commencing the re-location.

18. An entity according to claim 16 or 17 wherein the proxy (pr 1) is operable to serialise the server (MS 1) from its functional configuration into a configuration suitable for transmission through the distributed environment so as to achieve the re-location.

19. A software entity according to any one of claims 13 to 18, stored on a storage medium.

20. A signal for transmission in a distributed computing environment wherein a client (MA 1) and a server (MS 1) process data, **characterised in that** the signal comprises the server (MS 1) serialised for transmission between a first place (P 1) where it communicates with the client (MA 1), through the distributed computing environment and a second different place (P 2) to perform data processing.

21. A proxy (pr 1) for use in a distributed computing environment wherein a client (MA 1)and a server (MS 1) process data, **characterised in that** the proxy (pr 1) is operable to send the server (MS 1) from a first place (P 1) where it communicates with the client (MA 1), through the distributed computing environment towards a second different place P 2) to perform data processing.

22. A proxy (pr 1) according to claim 21 operable to freeze incoming calls for data processing to the server (MS 1) at the first place (P 1) whilst it is being sent from the first place (P 1) to the second place (P 2), and thereafter to direct the frozen calls towards the second place (P 2) to be processed by the server (MS 1) when it has become functional at the second place (P2).

23. A proxy (pr 1) according to claim 21 or 22 operable to wait for the server (MS 1) to complete its current processing tasks before sending it to the second place (P 2).

24. A proxy (pr 1) according to claim 21,22 or 23 operable to serialise the server (MS 1) from an operational configuration at the first place (P 1) into a configuration suitable for transmission through the distributed environment to the second place (P 2).

25. A host (1 or 2) provided with client (MA 1) and server (MS 1) objects for processing data in an object oriented distributed processing environment **characterised in that** the server object (MS 1) is selectively re-locatable to different places in the environment.

26. A host (1 or 2) according to claim 25 wherein the mobile server object (MS 1) is operable such that data calls thereto are frozen during the relocation.

27. A host (1 or 2) according to claim 25 wherein the server (MS 1)is provided with a proxy (pr 1) compatible with CORBA or OLE architecture.

28. A server object (MS 1) for processing data in an object oriented distributed processing environment **characterised in that** the server object (MS 1) is re-locatable for operation at different places and is provided in use with a proxy (pr 1) which freezes data calls thereto during the relocation and subsequently forwards them to the moved server object (MS 1).

## Patentansprüche

1. Verfahren zum Verarbeiten von Daten in einer verteilten Rechenumgebung, in der ein Client (MA 1) und ein Server (MS 1) Daten verarbeiten, **dadurch gekennzeichnet, daß** das Verfahren das Senden des Servers (MS 1) von einem ersten Ort (P1), an dem er mit dem Client (MA 1) kommuniziert, über die verteilte Rechenumgebung zu einem zweiten, anderen Ort (P2), damit er von hier eine Datenverarbeitung ausführt, umfaßt.

2. Verfahren nach Anspruch 1, das das Einfrieren ankommender Aufrufe für eine Datenverarbeitung beim Server (MS 1) an dem ersten Ort (P1), während er von dem ersten Ort (P1) zu dem zweiten Ort (P2) gesendet wird, und danach das Leiten der eingefrorenen Aufrufe zu dem zweiten Ort (P2), damit sie durch den Server (MS 1) verarbeitet werden, wenn er an dem zweiten Ort (P2) arbeitsfähig geworden ist, umfaßt.

3. Verfahren nach Anspruch 2, das das Warten auf den Server (MS 1) umfaßt, damit er seine momentanen Verarbeitungsaufgaben abschließt, bevor er zu dem zweiten Ort (P2) gesendet wird.

4. Verfahren nach einem vorhergehenden Anspruch, das das Umwandeln des Servers (MS 1) von einer Arbeitskonfiguration am ersten Ort (P1) in eine Konfiguration, die für die Übertragung durch die verteilte Umgebung zu dem zweiten Ort (P2) geeignet ist, umfaßt.

5. Verfahren nach Anspruch 4, bei dem die Umwandlung die Serialisierung des Servers (MS 1) umfaßt.

6. Verfahren nach einem vorhergehenden Anspruch, das das Erzeugen eines Proxy (pr 1) für den Server (MS 1) an dem ersten Ort (P1), der das Senden des Servers (MS 1) zu dem zweiten Ort (P2) steuert, umfaßt.

7. Verfahren nach einem vorhergehenden Anspruch, das das Senden des Client (MA 1) an einen anderen Ort in der verteilten Rechenumgebung umfaßt.

8. Verfahren zum Verarbeiten von Daten in einer verteilten Rechenumgebung, bei dem ein Client (MA 1) und ein Server (MS 1) Daten verarbeiten, **dadurch gekennzeichnet, daß** das Verfahren das Empfangen des Servers (MS 1), der von einem ersten Ort (P1), wo er mit dem Client (MA 1) kommuniziert, über die verteilte Rechenumgebung gesendet wird, an einem zweiten, anderen Ort (P2) umfaßt, damit er an dem zweiten Ort (P2) eine Datenverarbeitung ausführt.

9. Verfahren nach Anspruch 8, bei dem der Server (MS 1) an dem zweiten Ort (P2) in einer Form empfangen wird, die für die Übertragung über die verteilte Umgebung geeignet ist, und das das Umwandeln des empfangenen Servers (MS 1) an dem zweiten Ort (P2) in eine Form, die für die Verarbeitung von Daten an dem zweiten Ort (P2) geeignet ist, umfaßt.

10. Verfahren nach Anspruch 9, bei dem die Umwandlung die Deserialisierung des Servers (MS 1) umfaßt.

11. Verfahren nach Anspruch 8, 9 oder 10, das das Erzeugen eines Proxy (pr 1') für den empfangenen Server (MS 1) an dem zweiten Ort (P2) umfaßt.

12. Verfahren nach einem der Ansprüche 8 bis 11, das das Empfangen von von dem ersten Ort (P1) zum zweiten Ort (P2) geleiteten Datenverarbeitungsaufrufen für den Server (MS 1), nachdem der Server (MS 1) an dem zweiten Ort (P2) arbeitsfähig geworden ist, umfaßt.

13. Software-Entität, die so betreibbar ist, daß sie einen Server (MS 1) für einen Client (MA 1) in einer verteilten Rechenumgebung bereitstellt, **dadurch gekennzeichnet, daß** die Software-Entität über die Umgebung wahlweise zu verschiedenen Orten verschoben werden kann.

14. Entität nach Anspruch 13, die so betreibbar ist, daß sie als der Server (MS 1) an einem ersten Ort (P1) in der Umgebung arbeitet und dann verschoben wird und als der Server (MS 1) an dem zweiten Ort (P2) in der Umgebung arbeitet.

15. Entität nach Anspruch 13 oder 14, die so betreibbar ist, daß Datenaufrufe an sie von einem Client (MA 1) während der Verschiebung eingefroren werden.

16. Entität nach einem der Ansprüche 13 bis 15, die so betreibbar ist, daß sie einen Proxy (pr 1) bereitstellt, der so arbeitet, daß er den Server (MS 1) über die Umgebung sendet, um die Verschiebung zu erzielen.

17. Entität nach Anspruch 16, bei der der Proxy (pr 1) so arbeitet, daß er auf den Server (MS 1) wartet, damit er seine momentanen Verarbeitungsaufgaben abschließt, bevor die Verschiebung begonnen wird.

18. Entität nach Anspruch 16 oder 17, bei der der Proxy (pr 1) so betreibbar ist, daß er den Server (MS 1) aus seiner Arbeitskonfiguration in eine Konfiguration serialisiert, die für die Übertragung über die verteilte Umgebung geeignet ist, um so die Verschiebung zu erzielen.

19. Software-Entität nach einem der Ansprüche 13 bis 18, die in einem Speichermedium gespeichert ist.

20. Signal für die Übertragung in einer verteilten Rechenumgebung, in der ein Client (MA 1) und ein Server (MS 1) Daten verarbeiten, **dadurch gekennzeichnet, daß** das Signal den Server (MS 1) umfaßt, der für die Übertragung über die verteilte Rechenumgebung zwischen einem ersten Ort (P1), wo er mit dem Client (MA 1) kommuniziert, und einem zweiten, anderen Ort (P2) serialisiert wird und eine Datenverarbeitung ausführt.

21. Proxy (pr 1) für die Verwendung in einer verteilten Rechenumgebung, in der ein Client (MA 1) und ein Server (MS 1) Daten verarbeiten, **dadurch gekennzeichnet, daß** der Proxy (pr 1) so betreibbar ist, daß er den Server (MS 1) von einem ersten Ort (P1), wo er mit dem Client (MA 1) kommuniziert, über die verteilte Rechenumgebung zu einem zweiten, anderen Ort (P2) sendet, damit er eine Datenverarbeitung ausführt.

22. Proxy (pr 1) nach Anspruch 21, der so betreibbar ist, daß er ankommende Datenverarbeitungsaufrufe für den Server (MS 1) an dem ersten Ort (P1) einfriert, während dieser von dem ersten Ort (P1) zu dem zweiten Ort (P2) gesendet wird, und danach die eingefrorenen Aufrufe zu dem zweiten Ort (P2) leitet, damit sie von dem Server (MS 1) verarbeitet werden, wenn er an dem zweiten Ort (P2) arbeitsfähig geworden ist.

23. Proxy (pr 1) nach Anspruch 21 oder 22, der so betreibbar ist, daß er auf den Server (MS 1) wartet, damit dieser seine momentanen Verarbeitungsaufgaben abschließen kann, bevor er ihn zu dem zweiten Ort (P2) sendet.

24. Proxy (pr 1) nach Anspruch 21, 22 oder 23, der so betreibbar ist, daß er den Server (MS 1) aus einer Arbeitskonfiguration an dem ersten Ort (P1) in eine Konfiguration serialisiert, die für die Übertragung über die verteilte Umgebung zu den zweiten Ort (P2) geeignet ist.

25. Host (1 oder 2), der mit Client-Objekten (MA 1) und Server-Objekten (MS 1) für die Verarbeitung von Daten in einer objektorientierten verteilten Verarbeitungsumgebung versehen ist, **dadurch gekennzeichnet, daß** das Server-Objekt (MS 1) wahlweise an andere Orte in der Umgebung verschiebbar ist.

26. Host (1 oder 2) nach Anspruch 25, bei dem das mobile Server-Objekt (MS 1) so betreibbar ist, daß Datenaufrufe für das Server-Objekt (MS 1) während der Verschiebung eingefroren werden.

27. Host (1 oder 2) nach Anspruch 25, bei dem der Server (MS 1) mit einem Proxy (pr 1) versehen ist, der mit einer CORBA- oder OLE-Architektur kompatibel ist.

28. Server-Objekt (MS 1) für die Verarbeitung von Daten in einer objektorientierten verteilten Verarbeitungsumgebung, **dadurch gekennzeichnet, daß** das Server-Objekt (MS 1) für eine Operation an unterschiedlichen Orten verschiebbar ist und im Betrieb mit einem Proxy (pr 1) versehen ist, der Datenaufrufe für das Server-Objekt (MS 1) während der Verschiebung einfriert und anschließend diese Datenaufrufe zu dem bewegten Server-Objekt (MS 1) weiterleitet.

## Revendications

1. Procédé de traitement de données dans un environnement informatique réparti dans lequel un client (MA 1) et un serveur (MS 1) traitent des données, **caractérisé en ce que** le procédé comprend l'envoi du serveur (MS 1) depuis un premier emplacement (P1) où il communique avec le client (MA 1), par l'intermédiaire de l'environnement informatique réparti, vers un second emplacement différent (P2) pour exécuter un traitement de données à partir de celui-ci.

2. Procédé selon la revendication 1, comprenant le gel des appels entrants en vue d'un traitement de données vers le serveur (MS 1) au premier emplacement (P1) pendant qu'il est en cours d'envoi depuis le premier emplacement (P1) vers le second emplacement (P2), et ensuite l'orientation des appels gelés vers le second emplacement (P2) pour y être traités par le serveur (MS 1) lorsqu'il est devenu fonctionnel au second emplacement (P2).

3. Procédé selon la revendication 2, comprenant une attente que le serveur (MS 1) ait terminé ses tâches de traitement en cours avant de l'envoyer au second emplacement (P2).

4. Procédé selon l'une quelconque des revendications précédentes, comprenant la conversion du serveur (MS 1) d'une configuration fonctionnelle au premier emplacement (P1) en une configuration convenant à une transmission par l'intermédiaire de l'environnement réparti vers le second emplacement (P2).

5. Procédé selon la revendication 4, dans lequel la conversion comprend la conversion en série du serveur (MS 1).

6. Procédé selon l'une quelconque des revendications précédentes, comprenant la création d'un serveur mandataire "proxy" (pr 1) pour le serveur (MS 1) au premier emplacement (P1), qui commande l'envoi du serveur (MS 1) vers le second emplacement (P2).

7. Procédé selon l'une quelconque des revendications précédentes, comprenant l'envoi du client (MA 1) vers un emplacement différent dans l'environnement informatique réparti.

8. Procédé de traitement de données dans un environnement informatique réparti dans lequel un client (MA 1) et un serveur (MS 1) traitent des données, **caractérisé en ce que** le procédé comprend la réception du serveur (MS 1) envoyé depuis un premier emplacement (P1) où il communiquait avec le client (MA 1), par l'intermédiaire de l'environnement informatique réparti, à un second emplacement différent (P2), pour exécuter un traitement de données au second emplacement (P2).

9. Procédé selon la revendication 8, dans lequel le serveur (MS 1) est reçu au second emplacement (P2) sous une forme appropriée à une transmission par l'intermédiaire de l'environnement réparti, et comprenant la conversion du serveur reçu (MS 1) au second emplacement (P2) sous une forme convenant au traitement des données au second emplacement (P2).

10. Procédé selon la revendication 9, dans lequel la conversion comprend la conversion en parallèle du serveur (MS 1).

11. Procédé selon la revendication 8, 9 ou 10 comprenant la production d'un serveur mandataire (pr1' pour le serveur reçu (MS 1), au second emplacement (P2).

12. Procédé selon l'une quelconque des revendications 8 à 11, comprenant la réception au second emplacement (P2), d'appels de traitement de données destinés au serveur (MS 1) orientés vers celui-ci depuis le premier emplacement (P1) après que le serveur (MS 1) est devenu fonctionnel au second emplacement (P2).

13. Entité logicielle pouvant être mise en oeuvre pour fournir un serveur (MS 1) destiné à un client (MA 1) dans un environnement informatique réparti, **caractérisée en ce que** l'entité logicielle peut être relocalisée sélectivement à des emplacements différents dans tout l'environnement.

14. Entité selon la revendication 13, pouvant être mise en oeuvre pour fonctionner en tant que serveur (MS 1) à un premier emplacement (P1) dans l'environnement et ensuite pour se relocaliser et fonctionner en tant que serveur (MS 1) à un second emplacement (P2) dans l'environnement.

15. Entité selon la revendication 13 ou 14, pouvant être mise en oeuvre de telle sorte que des appels de données vers celle-ci provenant d'un client (MA 1) sont gelés durant la relocalisation.

16. Entité selon l'une quelconque des revendications 13 à 15, pouvant être mise en oeuvre pour fournir un serveur mandataire (pr 1) agissant pour envoyer le serveur (MS 1) par l'intermédiaire de l'environnement afin d'obtenir la relocalisation.

17. Entité selon la revendication 16, dans lequel le serveur mandataire (pr 1) agit pour attendre que le serveur (MS 1) termine ses tâches de traitement en cours avant de débuter la relocalisation.

18. Entité selon la revendication 16 ou 17, dans laquelle le serveur mandataire (pr 1) peut être mis en oeuvre pour convertir en série le serveur (MS 1) depuis sa configuration fonctionnelle en une configuration convenant à une transmission par l'intermédiaire de l'environnement réparti de façon à obtenir la relocalisation.

19. Entité logicielle selon l'une quelconque des revendications 13 à 18, mémorisée sur un support de mémorisation.

20. Signal destiné à une transmission dans un environnement informatique réparti dans lequel un client (MA 1) et un serveur (MS 1) traitent des données, **caractérisé en ce que** le signal comprend le serveur (MS 1) converti en série en vue d'une transmission entre un premier emplacement (P1) où il communique avec le client (MA 1), par l'intermédiaire de l'environnement informatique réparti, et un second emplacement différent (P2) pour exécuter un traitement de données.

21. Serveur mandataire (pr 1) destiné à être utilisé dans un environnement informatique réparti dans lequel un client (MA 1) et un serveur (MS 1) traitent des données, **caractérisé en ce que** le serveur mandataire (pr 1) peut être mis en oeuvre pour envoyer le serveur (MS 1) d'un premier emplacement (P1) où il communique avec le client (MA 1), par l'intermédiaire de l'environnement informatique réparti, vers un second emplacement différent (P2) pour exécuter un traitement de données.

22. Serveur mandataire (pr 1) selon la revendication 21, pouvant être mis en oeuvre pour geler des appels entrants en vue d'un traitement de données vers le serveur (MS 1) au premier emplacement (P1), pendant qu'il est en cours d'envoi du premier emplacement (P1) au second emplacement (P2), et ensuite pour orienter les appels gelés vers le second emplacement (P2) afin d'être traités par le serveur (MS 1) lorsqu'il est devenu fonctionnel au second emplacement (P2).

23. Serveur mandataire (pr 1) selon la revendication 21 ou 22, pouvant être mis en oeuvre pour attendre que le serveur (MS 1) termine ses tâches de traitement en cours avant de l'envoyer au second emplacement (P2).

24. Serveur mandataire (pr 1) selon la revendication 21, 22 ou 23, pouvant être mis en oeuvre pour convertir en série le serveur (MS 1) depuis une configuration fonctionnelle au premier emplacement (P1) en une configuration convenant à une transmission par l'intermédiaire de l'environnement réparti vers le second emplacement (P2).

25. Hôte (1 ou 2) muni d'objets client (MA 1) et serveur (MS 1) destinés à traiter des données dans un environnement de traitement réparti orienté objet, **caractérisé en ce que** l'objet serveur (MS 1) peut être relocalisé sélectivement à des emplacements différents dans l'environnement.

26. Hôte (1 ou 2) selon la revendication 25, dans lequel l'objet serveur mobile (MS 1) peut être mis en oeuvre de telle sorte que des appels de données vers celui-ci soient gelés durant la relocalisation.

27. Hôte (1 ou 2) selon la revendication 25, dans lequel le serveur (MS 1) est muni d'un serveur mandataire (pr 1) compatible avec une architecture de type CORBA ou OLE.

28. Objet serveur (MS 1) destiné au traitement de données dans un environnement de traitement réparti orienté objet, **caractérisé en ce que** l'objet serveur (MS 1) peut être relocalisé pour des opérations à différents emplacements et est muni en utilisation d'un serveur mandataire (pr 1) qui gèle des appels de données vers celui-ci durant la relocalisation et les envoie ensuite vers l'objet serveur déplacé (MS 1).
